# EUROPÄISCHE PATENTSCHRIFT

(11) **EP 3 567 809 B1**
(45) Veröffentlichungstag und Bekanntmachung des Hinweises auf die Patenterteilung: **27.08.2025**
(21) Anmeldenummer: 19172552.2
(22) Anmeldetag: 03.05.2019
(51) Int. Cl.: H04L 12/40

(54) **SYSTEM ZUM STEUERN, REGELN UND/ODER ÜBERWACHEN EINES LUFTFAHRZEUGS**
SYSTEM FOR CONTROLLING, REGULATING AND/OR MONITORING AN AIRCRAFT
SYSTÈME DE COMMANDE, DE RÉGULATION ET / OU DE SURVEILLANCE D'UN AÉRONEF

(30) Priorität: 11.05.2018 DE 102018111338
(43) Veröffentlichungstag der Anmeldung: 13.11.2019
(73) Patentinhaber: Liebherr-Aerospace Lindenberg GmbH, 88161 Lindenberg/Allgäu (DE)
(72) Erfinder: Mielzarek, Rainer, 88171 Weiler-Simmerberg (DE); Kronburger, Frank, 88161 Lindenberg (DE)
(74) Vertreter: Herrmann, Uwe

(56) Entgegenhaltungen:
- EP-A1- 3 026 867
- DE-A1- 102005 008 556
- DE-A1- 102011 115 318
- DE-A1- 102015 105 929
- US-A1- 2007 164 166
- ANONYMOUS: "Redundanz (Technik) - Wikipedia - Version vom 15. Januar 2018", 15 January 2018 (2018-01-15), XP055635736, Retrieved from the Internet <URL:https://de.wikipedia.org/w/index.php?title=Redundanz_(Technik)&oldid=172966876> [retrieved on 20191024]
- ANONYMOUS: "Redundancy (engineering) - Wikipedia - Version of 13 April 2018", 13 April 2018 (2018-04-13), XP055637420, Retrieved from the Internet <URL:https://en.wikipedia.org/w/index.php?title=Redundancy_(engineering)&oldid=836196997> [retrieved on 20191030]

## Beschreibung

Die vorliegende Erfindung betrifft ein System zum Steuern, Regeln und/oder Überwachen eines Luftfahrzeugs, insbesondere eines Flugzeugs.

Typischerweise werden für die im Flugbetrieb notwendigen Systeme unterschiedliche Computer und lokale Datenbusse verwendet, da jedes System spezifische Funktionsanforderungen aufweist und zur Umsetzung der Funktionen bestimmt ausgebildete Interfaces benötigt. Dies führt dazu, dass eine Vielzahl von unterschiedlichen Geräten und Systemkonfigurationen anwendungsspezifisch entwickelt werden müssen, was mit hohen Entwicklungskosten, hohen Kosten in der Serienfertigung und technischen Risiken verbunden ist. Solche Systeme umfassen beispielsweise das Flugsteuersystem, das Fahrwerksystem, das Betätigungssystem oder das Klimatisierungssystem eines Luftfahrzeugs. Dem Fachmann ist klar, dass die vorstehende exemplarische Aufzählung nicht abschließend ist und die Erfindung auch bei weiteren nicht aufgezählten Systemen zum Einsatz kommen kann.

Bisher ist es in der Regel so, dass bspw. im Fahrwerksbereich eigenständige Computer entwickelt werden, die die typischen Schnittstellen und die zugehörige Funktionalität für Fahrwerksapplikationen bereitstellen. Für andere Systeme wie z.B. für Flugteuerungssysteme sind die eigens entwickelten Computer jedoch nicht geeignet. So werden für Flugsteuerungssysteme wiederum speziell für diese Anwendung entwickelte Computer eingesetzt.

Hieraus ergibt sich der nachteilhafte Effekt, dass Geräte die für ein bestimmtes System oder Teile eines Systems entwickelt werden, für andere Systeme nicht anwendbar sind oder in anderen Systemen nicht nutzbar sind. Ein hoher Entwicklungsaufwand und entsprechend hohe Kosten sind die Folge, wenn neue oder geänderte Systeme entwickelt werden müssen.

Für den Flugzeugbetreiber ist es im Service und bei der Wartung sehr aufwändig, die unterschiedlichen Geräte bei Ausfall oder Fehlverhalten korrekt zu warten. Auch die Beschaffung von Ersatzgeräten oder Lagerhaltung von unterschiedlichen Geräten ist entsprechend aufwändig und kostenintensiv und führt teils zu langen unerwünschten Standzeiten von Flugzeugen am Boden.

Gemäß der US 8,600,584 B2 wurde ein System vorgesehen, das auf generisch anwendbaren Computern beruht und unterschiedliche Flugsteuersysteme mit gleichen Geräten vorsieht. Die Vernetzung der Computer erfolgt dabei über ein AFDX-Netzwerk und es sind im Fluggerät sogenannte "Switches" vorgesehen, die als separate Geräte installiert sind.

Aufgrund der in der Druckschrift verfolgten IMA-Philosophie (IMA: "integrated modular avionics") sind die Schnittstellen von unterschiedlichen Systemtypen (z.B. Fahrwerksanwendung, Flight Control Systeme, Klimatisierungssysteme, ... ) auf einzelnen Computer zusammengeführt. Die Komplexität und die Fehleranfälligkeit dieses in der Druckschrift behandelten Systems sind vergleichsweise hoch.

Aus dem Stand der Technik bekannte Konzepte verwenden Datenkonzentratoren, welche Informationen aus unterschiedlichen Systemtypen gemeinsam verarbeiten. Dabei ist es von Nachteil, dass während der Entwicklung und Systemintegration die Systeme unterschiedlicher Anforderungen direkt voneinander abhängig sind oder im Fehlerfall eine Fehlerisolierung häufig erschwert stattfindet. Außerdem können im Fehlerfall oder bei Ausfall einer Komponente mehrere Systeme gleichzeitig beeinträchtigt sein.

Beispielhaft wird auf die vorbekannten System gemäß EP3026867A1 und DE102005008556A1 verwiesen.

Es ist demnach das Ziel der vorliegenden Erfindung, ein System zum Steuern, Regeln und/oder Überwachen eines Luftfahrzeugs zu schaffen, das hinsichtlich des Aufwands der Entwicklung als auch der laufenden Kosten beim Flugzeughersteller geringere Ressourcen in Anspruch nimmt. Zudem soll der Funktionsumfang, die Verfügbarkeit und Sicherheit je nach Anforderung an die Systeme durch geeignete Auswahl und Kombination der verwendbaren Komponenten kostenoptimiert ausgelegt werden können.

Dies gelingt mit einem System, das sämtliche Merkmale des Anspruchs 1 aufweist. Weitere vorteilhafte Ausgestaltungen sind in den abhängigen Ansprüchen wiedergegeben.

Demnach umfasst das System zum Steuern, Regeln und/oder Überwachen eines Luftfahrzeugs: wenigstens eine Hauptprozessoreinheit, die dazu ausgelegt ist, Daten zu verarbeiten und auszugeben, wenigstens eine erste Fernelektronikeinheit, die eine Schnittstelle aufweist, die dazu ausgelegt ist, mit einer ersten Luftfahrzeugsfunktion zusammenzuwirken, und wenigstens eine zweite Fernelektronikeinheit, die eine Schnittstelle aufweist, die dazu ausgelegt ist, mit einer Schnittstelle einer zweiten Luftfahrzeugsfunktion zusammenzuwirken. Das System ist dadurch gekennzeichnet, dass die erste Fernelektronikeinheit und die zweite Fernelektronikeinheit in ihrem Hardwareaufbau identisch zueinander sind.

Durch das Vorsehen eines identischen Aufbaus von Fernelektronikeinheiten (auch genannt: "Remote Electric Data Concentrators, REDC"), die für unterschiedliche Luftfahrzeugfunktionen herangezogen werden können und gleichzeitig in ihrem Hardwareaufbau identisch sind, können die Stückkosten bei der Herstellung verringert werden. Zudem nimmt durch die mehrmalige Verwendung der gleichen Hardware die Komplexität des Systems ab und es wird im Fehlerfall leichter, entsprechende Ersatz- oder Austauschteile vorzuhalten.

Die im erfindungsgemäßen System anzuwendenden Fernelektronikeinheiten basieren auf den Eigenschaften einer generischen Hardware, die zur Ansteuerung und Überwachung von Cockpitkomponenten, eines Flugsteuersystems, eines Fahrwerkssystems, eines Betätigungssystems und/oder eines Klimatisierungssystems ausgelegt ist.

Nach einer vorteilhaften Modifikation der Erfindung ist vorgesehen, dass die Schnittstelle der ersten Fernelektronikeinheit und die Schnittstelle der zweiten Fernelektronikeinheit konfigurierbar sind, vorzugsweise über das Anpassen von Software oder eines IP Cores.

So wird sichergestellt, dass für die unterschiedlichen Funktionen der gleiche Hardwareaufbau verwendbar ist, obwohl die unterschiedlichen Schnittstellen verschiedene Anforderungen aufweisen.

Demnach kann vorgesehen sein, dass die erste Luftfahrzeugsfunktion und/oder die zweite Luftfahrzeugsfunktion ein Flugsteuerungssystem, ein Fahrwerkssystem, ein Betätigungssystem und/oder ein Klimatisierungssystem eines Luftfahrzeugs ist.

Die Verwendung von in ihrer Hardware sich gleichenden Fernelektronikeinheiten zum Ausführen der unterschiedlichen Funktionen, bringt einen erheblichen Skalierungsvorteil mit sich.

Weiter kann vorgesehen sein, dass das System ferner eine zweite Hauptprozessoreinheit umfasst, wobei die erste Hauptprozessoreinheit über einen ersten Datenbus mit der ersten Fernelektronikeinheit verbunden ist, die zweite Hauptprozessoreinheit über einen zweiten Datenbus mit der zweiten Fernelektronikeinheit verbunden ist, und der erste Datenbus getrennt von dem zweiten Datenbus ist, so dass die beiden Datenbusse keine gemeinsamen Komponenten aufweisen.

Dabei kann vorgesehen sein, dass der erste Datenbus und der zweite Datenbus in ihrer zugrundeliegenden Technologie identisch sind.

Für eine Luftfahrzeugsfunktion gibt es demnach jeweils mindestens eine Hauptprozessoreinheit, die im englischen auch Main Processing Electronic Unit, MPEU, genannt wird, mindestens eine Fernelektronikeinheit und mindestens einem Datenbussystem, welches die zur jeweiligen Luftfahrzeugsfunktion zugehörigen Komponenten verbindet. Datenbusse verschiedener Systeme sind dabei voneinander getrennt.

Das im erfindungsgemäßen System anzuwendende Datenbussystem basiert auf einem deterministischen und echtzeitfähigen Feldbus unter Verwendung eines Time-Triggered-Protokolls.

Nach einer optionalen Modifikation kann vorgesehen sein, dass die erste Hauptprozessoreinheit und die zweite Hauptprozessoreinheit in ihrem Hardwareaufbau identisch zueinander sind.

Die im erfindungsgemäßen System herangezogenen Hauptprozessoreinheiten basieren auf den Eigenschaften einer generischen Hardware, welche hauptsächlich die Schnittstelle zu den flugzeugtypischen Bussystem oder -systemen bildet. Zudem kann es dazu ausgelegt sein, für die verbundene Luftfahrzeugfunktion relevante Daten zum Steuern, Regeln und Überwachen zu berechnen und auszuwerten oder systemspezifische Informationen dem Flugzeug zur Verfügung zu stellen. Die Hauptprozessoreinheit dient vorzugsweise im erfindungsgemäßen System damit auch als Zentrale zur Verteilung von Daten auf die angeschlossenen Komponenten.

Nach einer vorteilhaften Ausgestaltung des erfindungsgemäßen Systems sind sämtliche im System vorhandene Fernelektronikeinheiten und/oder Hauptprozessoreinheiten in ihrem Hardwareaufbau identisch zueinander. Zudem ist es ebenfalls möglich, dass sämtliche im System vorhandene Fernelektronikeinheiten und/oder Hauptprozessoreinheiten in ihrem Hardwareaufbau aus nur zwei im Hardwareaufbau verschiedenen Typen bestehen. Es kann demnach zwei Typen von Hauptprozessoreinheiten und/oder zwei Typen von Fernelektronikeinheiten geben. Dies ist bei sicherheitskritischen Systemen von Vorteil, da aufgrund einer Abweichung der Übereinstimmung in der Hardware, das Auftreten strukturell bedingter Fehler in beiden unterschiedlichen Typen deutlich verringert wird. Diese zum Teil von Zulassungsbehörden geforderte dissimilare Redundanz von Bauteilen schwächt zwar die Vorteile hinsichtlich des positiv wirkenden Mengeneffekts der verbauten Teile, ist aber für eine ausreichende Sicherheit bei kritischen Systemen vorteilhaft.

Vorzugsweise umfasst die Hauptprozessoreinheit einen integrierten Hub, der mehrere Ports zum Anschließen einer Datenleitung für Fernelektronikeinheiten aufweist und vorzugsweise dazu ausgelegt ist, identische Daten über mehrere oder alle seiner Ports an die hieran angeschlossenen Datenleitungen synchron zu versenden.

Nachdem die Hauptprozessoreinheit im Rahmen des erfindungsgemäßen Systems universell anwendbar sein soll, beinhaltet die Hauptprozessoreinheit vorzugsweise einen integrierten Hub, der über seine Ports alle Daten an alle Netzteilnehmer weiterleitet und einen synchronen Datenverkehr zwischen allen Teilnehmern ermöglicht. Damit ist es im System möglich, ausschließlich durch geeignete Busverbindungen, ohne Anwendung von zusätzlich ins Flugzeug zu installierenden Geräte, die benötigten Daten über große Distanzen an eine Vielzahl von Fernelektronikeinheiten zu übertragen. Ferner wird ermöglicht, die Anzahl der Busteilnehmer durch Anschließen eines weiteren Bussystems und weiterer Komponenten an einem Port des Hubs zu erweitern, wobei alle Teilnehmer in der Lage sind untereinander ohne Verzögerung zu kommunizieren.

Nach einer weiteren vorzugsweisen Modifikation ist vorgesehen, dass die Hauptprozessoreinheit drei Anschlüsse aufweist, die alle dazu ausgelegt sind, mit der gleichen Datenbustechnologie zu kommunizieren, wobei vorzugsweise ein Anschluss der integrierte Hub der vorstehend beschriebenen vorteilhaften Einschränkung der Erfindung ist.

In spezifischen Applikationen ist es notwendig, dass Teilnehmer des erfindungsgemäßen Systems über ein unabhängiges Datennetzwerk mit anderen Dateninhalten kommunizieren. Diese Anforderung wird dadurch gelöst, dass die Hauptprozessoreinheit wenigstens zwei weitere Anschlüsse mit derselben Bustechnologie zur Verfügung stellt. Damit wird ferner ermöglicht, dass weitere Hauptprozessoreinheiten oder Fernelektronikeinheiten angeschlossen werden können.

Im System ist es je nach Applikation von Vorteil, wenn Grundfunktionen über getrennte Netzwerke ausgeführt werden. Unter Grundfunktion versteht man beispielsweise die Auswertung von Cockpitsensoren, welche die Kommandos der Piloten an die Hauptprozessoreinheit übertragen, die Ansteuerung von Aktuatoren im Flügel, und auch die Zusammenführung der Signale von Überwachungssensoren. Der Vorteil liegt darin, dass im Fehlerfall innerhalb eines Netzwerkes nur eine Teilfunktion zum Ausfall kommt. Ferner ermöglicht eine Trennung eine präzisere Fehlerisolierung und eine Vereinfachung der Integration der Grundfunktionen (z.B. bei Modifikationen einer Teilfunktion).

Nach einer Fortbildung der Erfindung ist es von Vorteil, wenn die Hauptprozessoreinheit Bestandteil zweier voneinander getrennter Datenbusse ist.

Es ist je nach Applikation von Vorteil, wenn Grundfunktionen über getrennte Netzwerke ausgeführt werden. Unter Grundfunktion versteht man beispielhaft die Auswertung von Cockpitsensoren, welche die Kommandos der Piloten an die Hauptprozessoreinheit übertragen, eine Ansteuerung von Aktuatoren im Flügel oder auch die Zusammenführung der Signale von Überwachungssensoren.

Der Vorteil liegt darin, dass im Fehlerfall innerhalb eines Netzwerkes nur eine Teilfunktion zum Ausfall kommt. Ferner ermöglicht eine Trennung eine präzisere Fehlerisolierung und eine Vereinfachung der Integration der Grundfunktionen (z.B. bei Modifikationen einer Teilfunktion)

Ferner kann vorgesehen sein, dass die Hauptprozessoreinheit und/oder die Fernelektronikeinheit eine Back-up-Datenbusschnittstelle aufweist, die dazu ausgelegt ist, mit einer zu den sonst in der Hauptprozessoreinheit verwendeten alternativen Datenbustechnologie zu arbeiten.

In hochkritischen Systemen muss typischerweise zur Erfüllung der Sicherheitsanforderungen der gleichzeitige Ausfall von redundant verwendeten Geräten aufgrund eines gleichgearteten Fehlers vermieden werden.

Um zu vermeiden, dass ein gleichgearteter Fehler im Datennetzwerk zum Ausfall eines redundant ausgeführten Datennetzwerkes führt, bei dem der Datenbus auf der gleichen Technologie basiert, kann vorgesehen sein, dass die Hauptprozessoreinheit und die Fernelektronikeinheit ein weiteres Datenbusinterface aufweist, das eine unterschiedliche Datenbustechnologie verwendet. Sofern die Sicherheitsanforderungen eine alternative Datenbustechnologie vorsehen, kann diese Anforderung umgesetzt werden.

Nach einer vorteilhaften Modifikation der Erfindung ist vorgesehen, dass ein erstes Teilsystem den ersten Hauptprozessrechner, die erste Fernelektronikeinheit und einen den ersten Hauptprozessrechner und die erste Fernelektronikeinheit verbindenden ersten Datenbus umfasst, ein zweites Teilsystem einen zweiten Hauptprozessrechner, die zweite Fernelektronikeinheit und einen den zweiten Hauptprozessrechner und die zweite Fernelektronikeinheit verbindenden zweiten Datenbus umfasst, wobei der Datenbus des ersten Teilsystems getrennt von dem Datenbus des zweiten Teilsystems ist, und das erste Teilsystem redundant zu dem zweiten Teilsystem ist.

Wobei jedes der Teilsysteme mehr als einen Hauptprozessrechner und/oder mehr als eine Fernelektronikeinheit aufweisen kann. Ist dies der Fall, so kann vorgesehen sein, dass sich die mehreren Hauptprozessrechner und/oder die mehreren Fernelektronikeinheiten eines Teilsystems in ihrem jeweiligen Hardwareaufbau nicht unterscheiden. Vorzugsweise kann auch vorgesehen sein, dass sich die mehreren Hauptprozessrechner und/oder die mehreren Fernelektronikeinheiten der mehreren Teilsysteme in ihrem jeweiligen Hardwareaufbau nicht unterscheiden.

Weiter kann vorgesehen sein, dass eine oder mehrere der mit dem Datenbus des ersten Teilsystems verbundenen Fernelektronikeinheiten auch mit dem Datenbus des zweiten Teilsystems verbunden sind. Umgekehrt gilt auch, dass eine oder mehrere der mit dem Datenbus des zweiten Teilsystems verbundenen Fernelektronikeinheiten auch mit dem Datenbus des ersten Teilsystems verbunden sind. Dies ist vorteilhaft, um im Fehlerfall eines Teilsystems die Daten des anderen Teilsystems übernehmen zu können.

Zudem ist es von Vorteil, wenn der Hauptprozessrechner des ersten Teilsystems mit dem Hauptprozessrechner des zweiten Teilsystems über eine von den Datenbussen separate Leitung verbunden ist, um einen Austausch von systemrelevanten Daten der Teilsysteme untereinander zu ermöglichen.

Nach einer optionalen Fortbildung sind die Komponenten des ersten Teilsystems zu den Komponenten des zweiten Teilsystems in ihrem Hardwareaufbau und ihrer Software verschieden, jedoch dazu ausgebildet, die gleichen äußerlichen Schnittstellen zu bedienen und inhaltlich die gleichen Funktionen umzusetzen, und wobei vorzugsweise innerhalb des ersten Teilsystems und/oder des zweiten Teilsystems die Hauptprozessoreinheiten und/oder die Fernelektronikeinheiten vom selben Typ sind.

Innerhalb eines Teilsystems ist es also vorteilhaft, wenn die Fernelektronikeinheiten in ihrem Hardwareaufbau identisch sind. Selbiges gilt auch für mehrere in einem Teilsystem verwendete Hauptprozessoreinheiten.

Für das Erfüllen der Redundanz werden zwei Typen der generischen Fernelektronikeinheiten und zwei Typen der generischen Hauptprozessoreinheit bereitgestellt, welche sich in Hardware und Software weitestgehend unterscheiden, also dissimilar sind. Diese sind aber in der Lage mindestens dieselben äußerlichen Schnittstellen zu bedienen und Funktionen zur Verfügung zu stellen.

Diese dissimilaren Komponenten sind dabei in der Lage die gleichen Funktionen durchzuführen, unterscheiden sich aber in Hardware und Software soweit , dass bei einer redundanten Funktionsweise gleichgeartete Fehler vermieden oder weitestgehend vermieden werden.

Dabei kann vorgesehen sein, dass das für die Kommunikation zwischen den Komponenten Hauptprozessoreinheit (beide Typen) und Fernelektronikeinheit (beide Typen) verwendete Datennetzwerk (Datenbustechnologie) auch im redundant konzipierten System auf derselben Technologie basiert. Um einen im Datennetzwerk auftretenden Fehler zu vermeiden, der das Potential hat, die dissimilar redundant ausgeführten Teilsysteme zu korrumpieren, kann eine Backup-Datenbustechnologie vorgesehen sein, die die Komponenten auf Grundlage einer alternativen Bustechnologie verbindet.

Nach einer vorteilhaften Ausführung ist vorgesehen, dass für jede der mehreren Luftfahrzeugsfunktionen des Luftfahrzeugs, ein separates System, umfassend mindestens einen Hauptprozessrechner, mindestens einen Fernelektronikeinheit und mindestens einen den Hauptprozessrechner und die Fernelektronikeinheit verbindenden Datenbus, vorhanden ist.

Bei gleichzeitiger Anwendung der Erfindung für mehrere Systemtypen (z.B. Fahrwerkssteuerungssysteme, Flugsteuerungssysteme, Klimatisierungssysteme ...) innerhalb eines Flugzeugs, werden die Systeme getrennt voneinander ausgeführt.

Durch das Separieren der einzelnen Funktionen und das Vorsehen der jeweiligen Komponenten, wird die Komplexität verringert und die Fehlersuche vereinfacht.

Der Datenbus kann für die Erfindung ein deterministischer und echtzeitfähiger Datenbus sein.

Das System basiert auf der Grundlage, dass mit gleichen Komponenten unterschiedliche Systeme angesteuert und überwacht werden können. Bei Anwendung von unterschiedlichen Systemtypen innerhalb eines Flugzeugs (z.B. Flight Control Systeme, Fahrwerke, Klimatisierungssysteme, ... ) ist es vorgesehen, dass für jeden Systemtyp ein getrenntes System zur Anwendung kommt. Dabei ist es vorteilhaft, dass jedes System gemäß seiner Funktionalität als eine Einheit entwickelt, integriert und zugelassen werden kann. Im Fehlerfall oder bei Ausfall einer Komponente ist es vorteilhaft, dass nur die Funktionalität oder Verfügbarkeit eines Systemtyps beeinträchtigt werden kann.

Weitere Merkmale, Vorteile und Einzelheiten der Erfindung werden anhand der nachfolgenden Figurenbeschreibung ersichtlich. Dabei zeigen:
- Fig. 1.: das erfindungsgemäße System in einer Prinzipdarstellung,
- Fig. 2:: das erfindungsgemäße System in einer redundanten Ausführung, und
- Fig. 3: das erfindungsgemäße System in einer Ausführung für eine sicherheitskritische Funktion.

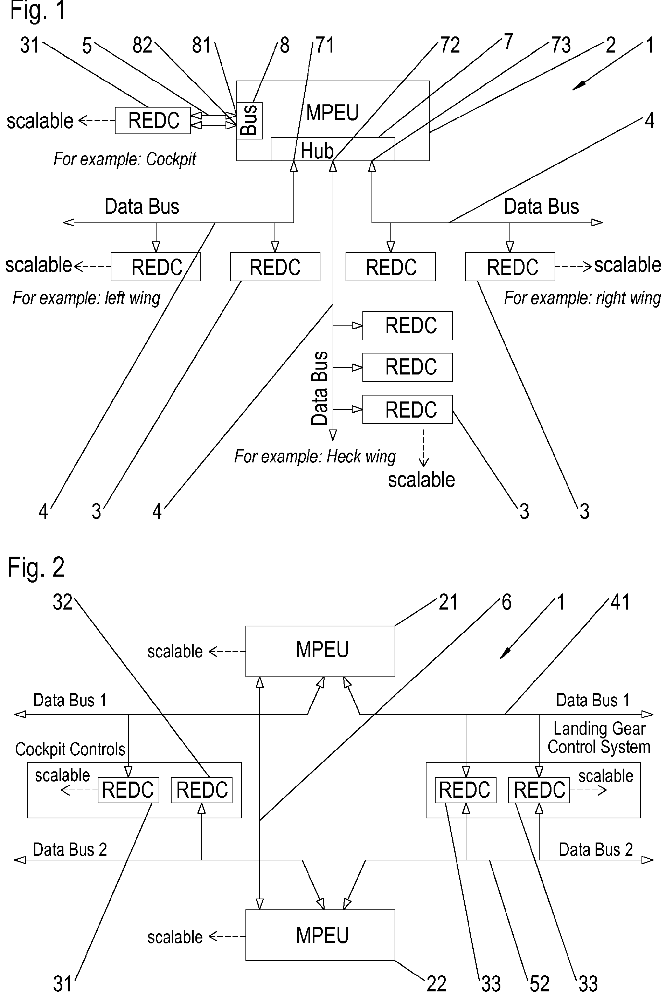

Fig. 1 zeigt das System 1, das eine Hauptprozessoreinheit 2 und mehrere daran über eine Busverbindung 4 angeschlossene Fernelektronikeinheiten 3 aufweist. Die Busverbindung 4 ist von der ebenfalls von der Hauptprozessoreinheit 2 ausgehenden Busverbindung 5 getrennt.

Das erfindungsgemäße Steuer-, Regelungs- oder Überwachungssystem 1 eines Flugzeugs bzw. Luftfahrzeugs umfasst mindestens eine Hauptprozessoreinheit 2 (auch genannt: Zentralrechner oder MPEU), mindestens eine Fernelektronikeinheit 3 (auch genannt: REDC) und mindestens einem Datenbussystem 4, 5, welches die Komponenten 2, 3 verbindet.

Die im erfindungsgemäßen System vorgesehenen Hauptprozessoreinheiten 2 basieren auf den Eigenschaften einer generischen Hardware, welche hauptsächlich die Schnittstelle zu den flugzeugtypischen Bussystemen bildet und für ein optional verbundenes Control- oder Überwachungssystem relevante Daten zum Steuern, Regeln und Überwachen berechnet und auswertet. Ferner kann es dem Flugzeug systemspezifische Informationen zur Verfügung stellt. Die Hauptprozessoreinheit 2 dient damit auch als Zentrale zur Verteilung von Daten auf die angeschlossenen Komponenten 3.

Die im erfindungsgemäßen System vorgesehenen anzuwendenden Fernelektronikeinheiten 3 basieren ebenfalls auf den Eigenschaften einer generischen Hardware, die zur Ansteuerung und Überwachung von System- und Cockpitkomponenten, bei Flugsteuerungen, Fahrwerken, Betätigungssystemen und Klimatisierungssystemen ausgelegt ist.

Das verwendete Datenbussystem 4, 5 basiert auf einem deterministischen und echtzeitfähigen Feldbus unter Verwendung eines Time-Triggered-Protokolls.

Die Anzahl der zu verwendenden Geräte bzw. Fernelektronikeinheiten 3 wird hauptsächlich durch die Örtlichkeit und Anzahl der dort notwendigen Schnittstellen bestimmt. Unter Örtlichkeit versteht man den Einbauort im Flugzeug wie z.B. im Cockpit, Flügel, Heck, Rumpf, Fahrwerksbereich, usw. Ziel ist es, den Verkabelungsaufwand und das damit verbundene Gewicht zu minimieren und in ein optimales Verhältnis zu den entstehenden Kosten zu bringen. Fig. 1 zeigt eine erweiterte Konfiguration des erfindungsgemäßen Systems, das mehrere in ihrer Hardware identische Fernelektronikeinheiten 3, welche über den Datenbus verbunden sind und mit dem Hauptrechner kommunizieren, aufweist. Die elektrischen Interfaces der Fernelektronikeinheiten 3 sind via Software anwendungsspezifisch konfigurierbar, so dass bei gleicher Hardware beispielhaft eine oder mehrere Fernelektronikeinheiten 3 die Ansteuerung von Aktuatoren durchführen und weitere Fernelektronikeinheiten 3 Sensoren im Cockpit auswerten können.

In typischen Flugzeugapplikationen ist es notwendig, Statusinformationen beispielhaft von einer Flügelseite (left wing oder right wing) mit der anderen Flügelseite zu vergleichen oder Steuersignale von der Hauptprozessoreinheit 2 synchron auf die im rechten und linken Flügel installierten Fernelektronikeinheiten 3 zu übertragen. Ferner werden in typischen Flugsteuerungssystemen beispielhaft die Status- und Steuersignale über große Entfernungen vom vorderen Teil des Flugzeugs zum Heck und umgekehrt übertragen.

Die Hauptprozessoreinheit 2 dient im erfindungsgemäßen System unter anderem als Zentrale für die Verteilung von Daten auf die angeschlossenen Netzwerke. Zum Datenaustausch zwischen den Fernelektronikeinheiten 3 und den Hauptprozessoreinheiten 2 kommt ein Datenbus 4, 5 zur Anwendung, bei dem je nach Anwendungsoption die Anzahl der Teilnehmer und Leitungslängen mittels unterschiedlicher Anschlussmöglichkeiten bei der Hauptprozessoreinheit 2 flexibel konfiguriert werden kann.

Bei dem Datenbus 4, 5 kann es sich um einen deterministischen und echtzeitfähigen Feldbus handeln. Für eine universelle Anwendbarkeit ist es vorteilhaft, dass die System-Exekution-Time durch die variable Teilnehmerzahl nicht beeinflusst wird. Ein Feldbus hat die Eigenschaft, dass die anwendbaren Leitungslängen und Anzahl der angeschlossenen Geräte zwar frei wählbar aber dennoch begrenzt sind.

Nachdem die Hauptprozessoreinheit 2 im Rahmen des Systems 1 universell anwendbar sein soll, beinhaltet die Hauptprozessoreinheiten 2 einen integrierten Hub 7, der über seine Ports 71, 72, 73 alle Daten an alle Netzteilnehmer weiterleitet und einen synchronen Datenverkehr zwischen allen Teilnehmern ermöglicht. Damit ist es möglich, ausschließlich durch geeignete Busverbindungen 4, ohne Anwendung von zusätzlich ins Flugzeug zu installierender Geräte, die benötigten Daten über große Distanzen an eine Vielzahl von Fernelektronikeinheiten 3 zu übertragen.

Ferner wird ermöglicht, die Anzahl der Busteilnehmer durch Anschließen eines weiteren Bussystems 4 und Komponenten an einem Port 71, 72, 73 des Hubs 7 zu erweitern, wobei alle Teilnehmer in der Lage sind untereinander ohne Verzögerung zu kommunizieren. In spezifischen Applikationen ist es notwendig, dass die Teilnehmer über ein unabhängiges Datennetzwerk 5 mit anderen Dateninhalten kommunizieren. Diese Anforderung wird dadurch gelöst, dass die Hauptprozessoreinheit 2 wenigstens zwei weitere Anschlüsse 81, 82 mit derselben Bustechnologie zur Verfügung stellt. Damit wird ferner ermöglicht, dass weitere Hauptprozessoreinheiten 2 oder Fernelektronikeinheiten 3 angeschlossen werden können.

Dabei ist es je nach Applikation von Vorteil, wenn Grundfunktionen über getrennte Netzwerke 4, 5 ausgeführt werden. Unter Grundfunktion versteht man beispielhaft die Auswertung von Cockpitsensoren, welche die Kommandos der Piloten an die Hauptprozessoreinheit 2 übertragen, das Ansteuerung von Aktuatoren im Flügel oder auch die Zusammenführung der Signale von Überwachungssensoren. Der Vorteil liegt darin, dass im Fehlerfall innerhalb eines Netzwerkes 4, 5 nur eine Teilfunktion zum Ausfall kommt. Ferner ermöglicht eine Trennung eine präzisere Fehlerisolierung und eine Vereinfachung der Integration der Grundfunktionen (z.B. bei Modifikationen einer Teilfunktion).

In der Fig. 1 werden die Informationen der Cockpitkomponenten mittels eines separaten Netzwerkes 5 übermittelt. Die Systemfunktionen, welche über den Datenbus 4 gesteuert werden, werden aufgrund der Komplexität und Verteilung der Fernelektronikeinheiten 3 im Flugzeug über ein eigenes zusammengeführtes Netzwerk 4 bedient.

Fig. 2 zeigt eine redundante Ausführung des Systems 1. Zur Erhöhung der Verfügbarkeit einer Funktion (z.B. bei Ausfall einer oder mehrerer Komponenten) kann unter Verwendung der generischen Hauptprozessoreinheit 2 und der generischen Fernelektronikeinheit 3 ein System konzipiert werden, das zwei zueinander redundante Teilsysteme aufweist, wobei jedes Teilsystem aus mindestens einem Hauptrechner 21, 22, einer Fernelektronikeinheit 31, 32, 33 und einem Datenbussystem 41, 52 besteht.

Dieses sogenannte Duplexsystem 1 hat den Vorteil, dass bei Ausfall einer Komponente oder Ausfall eines gesamten Teilsystems, das redundante System die Systemfunktionalität aufrechterhalten kann. Das System 1 ist derartig ausgebildet, dass die zur Betätigung und Überwachung des Systems 1 zugeordneten Fernelektronikeinheiten 3 selbstständig in der Lage sind, einen Fehler eines Teilsystems zu entdecken und im Fehlerfall die Daten des redundanten Teilsystems zur weiteren Ansteuerung und Überwachung zu übernehmen. Bei Bedarf kann das System 1 um weitere Teilsysteme erweitert werden. Diese Duplexarchitektur kann beispielhaft für eine Fahrwerksanwendung zugrunde gelegt werden. Dabei kommen zwei identische, aber getrennte Bussysteme 41, 52 mit angeschlossenen Komponenten zur Anwendung. Die Teilsysteme, welche in der Fig. 2 beispielhaft als Landing Gear Control System und Cockpit Controls dargestellt sind, können wie oben beschrieben anwendungsspezifisch konfiguriert und erweitert werden.

Die Cockpit Komponenten 31, 32 bestehen beispielhaft aus redundanten Sensoren deren Signale getrennt den generischen Fernelektronikeinheiten 3 zweier Bussysteme 41, 52 zugeordnet sind.

Die dem beispielhaften System zugeordneten Fernelektronikeinheiten 3 sind an beiden Bussystemen 41, 52 angeschlossen um im Fehlerfall eines Teilsystems die Daten des anderen Teilsystems übernehmen zu können. Der Austausch von systemrelevanten Daten beider Teilsysteme findet zwischen den Hauptprozessoreinheiten 2 statt, wobei ein im Sinne der generischen Hauptprozessoreinheit 2 ein frei belegbares Datenbusinterface zur Anwendung kommt, um eine Querverbindung 6 zwischen den beiden Hauptprozessoreinheiten 21, 22 zu schaffen. Es besteht die Möglichkeit, weitere Teilsysteme mittels Datenbus an die Hauptprozessoreinheit 2 anzuschließen (siehe Pfeil in Fig. 2 "scalable").

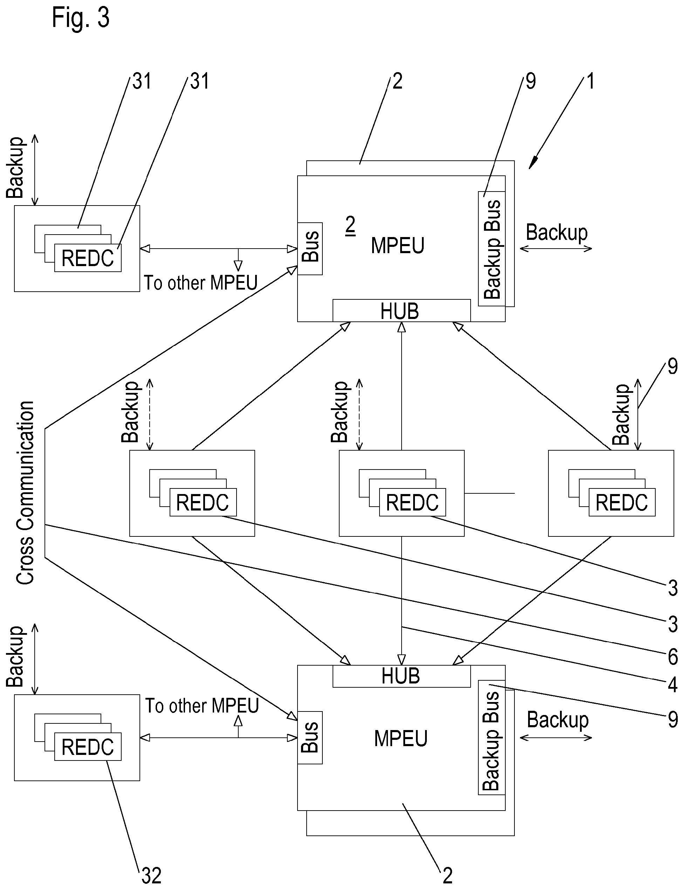

Fig. 3 zeigt ein erfindungsgemäßes System 1 für die Verwendung in hochkritischen Systemen. Zur Erfüllung der Sicherheitsanforderungen muss dabei typischerweise der gleichzeitige Ausfall von redundant verwendeten Geräten aufgrund eines gleichgearteten Fehlers vermieden werden. Dazu werden zwei Typen der generischen Fernelektronikeinheit 3 (REDC) und zwei Typen der generischen Hauptprozessoreinheit 2 (MPEU) bereitgestellt, wobei sich die beiden Typen in Hardware und Software weitestgehend unterscheiden (dissimilar). Sie sind aber in der Lage mindestens dieselben äußerlichen Schnittstellen und Funktionen zur Verfügung zu stellen. Das für die Kommunikation zwischen den Komponenten Hauptprozessoreinheit 2 (beide Typen) und Fernelektronikeinheit 3 (beide Typen) verwendete Datennetzwerk basiert auch im redundant konzipierten System auf derselben Technologie.

Um zu vermeiden, dass ein gleichgearteter Fehler im Datennetzwerk zum Ausfall des gesamten Datennetzwerkes führt, beinhalten die Hauptprozessoreinheit 2 und Fernelektronikeinheit 3 wenigstens ein weiteres Datenbusinterface 9 unterschiedlicher Technologie, das je nach Anforderung als Back-up Datenbus verwendet werden kann.

Das dargestellte beispielhafte Konzept ist für die Anwendung in einem sicherheitskritischen Flight Control System (FCS) geeignet ist. Die geforderte Verfügbarkeit wird dadurch erreicht, dass das System redundant aus zwei Teilsystemen aufgebaut ist. Es kommen gleiche Fernelektronikeinheiten 3 eines Typs und gleiche Hauptprozessoreinheiten 2 eines Typs innerhalb eines der beiden Teilsystems zur Anwendung.

Dabei ist die Anzahl der Geräte variable auswählbar. Im zum ersten Teilsystem redundanten Teilsystem kommen die generischen Fernelektronikeinheiten 3 und Hauptprozessoreinheiten 2 des zweiten Typs zur Anwendung, wenn ein gemeinsamer Ausfall oder ein gleichgearteter Fehler der redundanten Komponenten als sicherheitsrelevant eingestuft ist. In diesem Beispiel werden die zur Betätigung der Steuerflächen relevanten Cockpitsignale von Fernelektronikeinheiten 3 ausgewertet und den Hauptprozessoreinheiten 2 zur weiteren Verarbeitung über ein separates Datennetzwerk zur Verfügung gestellt. Dabei sind die Fernelektronikeinheiten 31, 32 der Cockpitschnittstellen identisch ausgebildet zu den Fernelektronikeinheiten 3 der Systemkomponenten (z.B. Aktuatoren oder Überwachungssensoren), da sie anwendungsspezifisch konfiguriert werden können.

Die Hauptprozessoreinheiten 2 dienen wie oben beschrieben als zentrale Rechnereinheit. Die den zu betätigenden und zu überwachenden Steuerflächen zugeordneten Fernelektronikeinheiten 3 sind beispielhaft an beiden Teilsystemen angeschlossen. Dadurch können im Fehlerfall eines Teilsystems die Daten des anderen Teilsystems übernommen werden.

Zur Vermeidung eines Verlustes der Ansteuerung und Überwachungsfunktion der Steuerflächen wegen eines gemeinsamen Ausfall beider Teildatennetzwerke, werden relevante Komponenten über ein Backup-System verbunden, über das eine minimale Steuerfunktion aufrechterhalten werden kann.

Die zu verwendenden Fernelektronikeinheiten 3 basieren auf den Eigenschaften einer generischen Hardware, deren Interfaces hauptsächlich für Anwendungen bei Flugsteuerungen, Fahrwerken, Betätigungssystemen und Klimatisierungssysteme ausgelegt sind. Die benötigten Interfaces werden über die Software oder IP Cores anwendungsspezifisch konfiguriert. Damit können unter Verwendung derselben Hardwarekomponenten unterschiedliche systemspezifische Konfigurationen hergestellt werden (z.B. Verwendung im Cockpitbereich zum Einlesen und Auswerten von Cockpit Sensoren, Steuern und Regeln von Flugsteuerungs- und Betätigungssystemen, Auswertung von Fahrwerkskomponenten wie z.B. Näherungsschalter). Die konfigurierbaren Interfaces sind in einer Weise umgesetzt, dass sie für die meisten Steuer-, Regelungs- und Überwachungsaufgaben innerhalb verschiedener Steuersysteme verwendet werden können. Die im System 1 anzuwendende Remote Elektronik besitzt darüber hinaus die Möglichkeit an zwei getrennte, aber gleichartige Bussysteme angeschlossen zu werden. Dabei ist die Fernelektronikeinheit 3 in der Lage, die zugeordneten Daten auf Gültigkeit zu prüfen und die Datenquelle zu selektieren, auf deren Basis die Funktionen ausgeführt werden sollen. Die Fernelektronikeinheiten 3 beinhaltet wenigstens ein weiteres Datenbusinterface 9 unterschiedlicher Technologie, das je nach Ausführung als Back-up-Datenbus verwendet werden kann.

Die zu verwendenden Hauptprozessoreinheiten 2 basieren ebenfalls auf den Eigenschaften einer generischen Hardware, welche die Schnittstelle zu den flugzeugtypischen Bussystemen bildet. Ferner wertet die Hauptprozessoreinheit 2 relevante Daten für das mit ihr verbundene Control- oder Überwachungssystem aus oder stellt systemspezifische Informationen zur Verfügung. Bei Bedarf werden vom Cockpit ausgehende Steuersignale, welche typischerweise von Sensoren- oder Schalterelementen als analoge Signale zur Verfügung gestellt werden, im erfindungsgemäßen System mittels lokal untergebrachten Fernelektronikeinheiten 3 digitalisiert und via Datenbus mindestens einer zentralen Hauptprozessoreinheit 2 zur weiteren Verarbeitung bereitgestellt. Dies geschieht vornehmlich dann, wenn diese Informationen nicht bereits auf den flugzeugtypischen Datenbussen verfügbar sind.

Die Hauptprozessoreinheit 2 bildet die zentrale Recheneinheit, welche aus den Cockpit-Informationen und den flugzeugspezifische Informationen unter Zuhilfenahme von vordefinierten Algorithmen die erforderlichen Signale generiert, die zum Ansteuern von Systemkomponenten benötigt werden. Je nach Komplexität des zu betreibenden Systems wird die Umsetzung der Steuergesetze und Berechnung der Regelungsalgorithmen von wenigstens einer Hauptprozessoreinheit 2 durchgeführt oder auf mehrere Hauptprozessoreinheiten 2 aufgeteilt, welche sich nach einer vorteilhaften Ausführung nur in ihrer Software unterscheiden. Die Steuersignale werden von der Hauptprozessoreinheit 2 auf dem Datenbusnetzwerk zur Verfügung gestellt, so dass generische Fernelektronikeinheiten 3 lokal die elektrischen Steuerelemente je nach Anforderung bedienen können.

Das erfindungsgemäße System ist als Plattform zu betrachten, die für die meisten flugzeugtypischen Anwendungen bereits geeignet ist und nur in einigen wenigen Fällen mit geringem und kostengünstigem Aufwand bezüglich Software, Hardwareentwicklung und Qualifikation angepasst werden kann.

Eine wie in Fig. 3 dargestellte beispielhafte Architektur, bspw. für ein Fahrwerksystem, umfasst zwei redundante Systeme, die voneinander unabhängig arbeiten. Jedes Teilsystem verwendet ein eigenständiges Bussystem für die Kommunikation zwischen den Systemkomponenten.

In dem beispielhaften System ist je Teilsystem eine Hauptprozessoreinheit 2 (MPEU) die zentrale Recheneinheit für die Fahrwerksfunktion. Dabei können zwei Hauptprozessoreinheiten 2 desselben Typs zur Anwendung kommen, welche die relevanten Flugzeugdaten, Steuersignale vom Cockpit und Systeminformationen verarbeiten. Die Hauptprozessoreinheit 2 ermittelt auch die Kommandos zum Betätigen und Steuern der Fahrwerkteilsysteme wie z.B. Landing Gear Extension and Retraction oder Steering. Außerdem führt die Hauptprozessoreinheit 2 eine unabhängige Überwachung der kritischen Funktionen durch. Die Hauptprozessoreinheit 2 dient ferner als Kommunikationsschnittstelle zum Flugzeug, d.h. die Hauptprozessoreinheit 2 stellt die im Flugzeug benötigten Daten der Fahrwerksanlage für weitere Anwendungen zur Verfügung.

Die Hauptprozessoreinheiten 2 sind über den Datenbus 4 mit Fernelektronikeinheiten 3 (REDC) verbunden, welche möglichst nahe am Fahrwerk und am Cockpit untergebracht sind. Dies hat den Vorteil, dass der Aufwand für die Installation der Verkabelung sowie das Kabelgewicht und die Leitungslängen gegenüber einem konventionellen System stark verringert werden können.

Die Fernelektronikeinheiten 3 bilden die dezentrale Schnittstelle zu den analogen und diskreten Signalen der Fahrwerks- und Cockpitkomponenten. Im vorliegenden Ausführungsbeispiel kommen Fernelektronikeinheiten 3 desselben Typs zur Anwendung. Für die im Fahrwerksbereich installierten Fernelektronikeinheiten 3 werden deren Ein- und Ausgänge vorzugweise für die Auswertung Näherungsschaltern oder das Ansteuerung von Ventilen verwendet, wogegen die dem Cockpit zugeordneten Fernelektronikeinheiten 3 beispielhaft die Kommandos der Piloten unter Verwendung des Landing Gear Control Panels und Tillers auswertet.

Die für das System relevanten Daten werden über den Datenbus 4 der Hauptprozessoreinheit 2 zur Verfügung gestellt. Gemäß des erfindungsgemäßen Systems sind die im Cockpit wie auch im Fahrwerk anzuwendenden Fernelektronikeinheiten 3 identisch in ihrer Hardware, werden aber mittels unterschiedlicher Applikationssoftware anwendungsspezifisch konfiguriert, um die unterschiedlichen Schnittstellen zu bedienen.

Bekannte Systemarchitekturen für Fahrwerksysteme verwenden typischerweise unabhängige Computer, bei denen jeder Computer mit einem zugeordneten Set von Sensoren und Aktuatoren und einem eigenen Kabelnetzwerk verbunden ist. Dies hat den Nachteil, dass bei Ausfall einer Komponente des Teilsystems, typischerweise das gesamte Teilsystem zum Ausfall kommt und nur das redundante System die Funktionalität aufrecht erhält. Erfindungsgemäß wird im vorliegenden Ausführungsbeispiel die Verfügbarkeit des Systems bei Ausfall einer Komponente oder eines Datennetzwerks dadurch wesentlich erhöht, dass die universell anwendbare Fernelektronikeinheit 3 in der Lage ist, Daten des redundanten Netzwerkes des anderen Teilsystems zu übernehmen und damit die Steuer und Überwachungsfunktion der Fahrwerkskomponente uneingeschränkt fortzuführen.

## Patentansprüche

1. System zum Steuern, Regeln und/oder Überwachen eines Luftfahrzeugs, umfassend:
wenigstens eine Hauptprozessoreinheit (2), die dazu ausgelegt ist, Daten zu verarbeiten und auszugeben,
wenigstens eine erste Fernelektronikeinheit (3), die eine Schnittstelle aufweist, die dazu ausgelegt ist, mit einer ersten Luftfahrzeugsfunktion zusammenzuwirken, und
wenigstens eine zweite Fernelektronikeinheit (3), die eine Schnittstelle aufweist, die dazu ausgelegt ist, mit einer Schnittstelle einer zweiten Luftfahrzeugsfunktion zusammenzuwirken, wobei
die erste Luftfahrzeugsfunktion und/oder die zweite Luftfahrzeugsfunktion ein Flugsteuerungssystem, ein Fahrwerkssystem, ein Betätigungssystem und/oder ein Klimatisierungssystem des Luftfahrzeugs ist, und wobei
die erste Fernelektronikeinheit (3) und die zweite Fernelektronikeinheit (3) in ihrem Hardwareaufbau identisch zueinander sind,
**dadurch gekennzeichnet, dass**
die Hauptprozessoreinheit (2) und die Fernelektronikeinheiten (3) auf den Eigenschaften einer generischen Hardware basieren; die Hauptprozessoreinheit (2) einen integrierten Hub (7) umfasst, der mehrere Ports (71, 72, 73) zum Anschließen einer auf einem deterministischen und echtzeitfähigen Feldbus unter Verwendung eines Time-Triggered-Protokolls basierenden Datenleitung (4) für Fernelektronikeinheiten (3) aufweist und dazu ausgelegt ist, alle identischen von der Hauptprozessoreinheit ausgegebenen Daten über mehrere oder alle seiner Ports an alle Netzteilnehmer, wobei es sich um eine Vielzahl von Fernelektronikeinheiten, weiterer Bussysteme und Komponenten handeln kann, weiterzuleiten und einen synchronen Datenverkehr zwischen allen Netzteilnehmern zu ermöglichen, wobei die Anzahl der Netzteilnehmer durch Anschließen weiterer Bussysteme und Komponenten an einem Port (71, 72, 73) des Hubs (7) erweiterbar ist und alle Netzteilnehmer in der Lage sind untereinander zu kommunizieren.

2. System nach dem vorhergehenden Anspruch 1, wobei die Hauptprozessoreinheit (2, 21, 22) drei Anschlüsse aufweist, die alle dazu ausgelegt sind, mit der gleichen Datenbustechnologie zu kommunizieren.

3. System nach einem der vorhergehenden Ansprüche, wobei die Hauptprozessoreinheit (2) Bestandteil zweier voneinander getrennter Datenbusse ist.

4. System nach einem der vorhergehenden Ansprüche, wobei die Hauptprozessoreinheit (2) ferner eine Back-up-Datenbusschnittstelle (9) aufweist, die dazu ausgelegt ist, mit einer zu den sonst in der Hauptprozessoreinheit (2) verwendeten unterschiedlichen Datenbustechnologie zu arbeiten.

## Claims

1. System for controlling, regulating and/or monitoring an aircraft, comprising:
at least one main processor unit (2) configured to process and output data,
at least a first remote electronics unit (3) having an interface adapted to interact with a first aircraft function, and
at least one second remote electronics unit (3) having an interface adapted to cooperate with an interface of a second aircraft function, wherein
the first aircraft function and/or the second aircraft function is a flight control system, a landing gear system, an actuation system and/or an air conditioning system of the aircraft, and wherein
the first remote electronics unit (3) and the second remote electronics unit (3) are identical to each other in terms of hardware structure,
**characterized in that**
the main processor unit (2) and the remote electronics units (3) are based on the properties of a generic hardware; the main processor unit (2) comprises an integrated hub (7) having a plurality of ports (71, 72, 73) for connecting a data line (4) for remote electronics units (3) based on a deterministic and real-time capable fieldbus using a Time Triggered Protocol and is configured to forward all identical data output by the main processor unit to all network members via some or all of its ports and to enable synchronous data traffic between all network members, wherein the network members can be a plurality of remote electronic units, further bus systems and components, wherein the number of network members can be expanded by connecting further bus systems and components to a port (71, 72, 73) of the hub (7) and all network members can communicate with one another.

2. System according to the preceding claim 1, wherein the main processor unit (2, 21, 22) comprises three ports, all of which are designed to communicate with the same data bus technology.

3. System according to any one of the preceding claims, wherein the main processor unit (2) is part of two separate data buses.

4. System according to any one of the preceding claims, wherein the main processor unit (2) further comprises a back-up data bus interface (9) which is adapted to operate using a different data bus technology to that otherwise used in the main processor unit (2).

## Revendications

1. Système de commande, de régulation et/ou de surveillance d'un aéronef, comprenant :
au moins une unité de processeur principale (2) qui est conçue pour traiter et éditer des données,
au moins une première unité électronique à distance (3), qui présente une interface qui est conçue pour coopérer avec une première fonction d'aéronef, et
au moins une deuxième unité électronique à distance (3) qui présente une interface qui est conçue pour coopérer avec une interface d'une deuxième fonction d'aéronef, dans lequel
la première fonction d'aéronef et/ou la deuxième fonction d'aéronef sont un système de commande de vol, un système de train d'atterrissage, un système d'actionnement et/ou un système de climatisation de l'aéronef, et dans lequel la première unité électronique à distance (3) et la deuxième unité électronique à distance (3) sont identiques l'une par rapport à l'autre dans leur structure matérielle,
**caractérisé en ce que**
l'unité de processeur principale (2) et les unités électroniques à distance (3) se basent sur les propriétés d'un matériel générique ; l'unité de processeur principale (2) comprend un concentrateur intégré (7), qui présente plusieurs ports (71, 72, 73) destinés à raccorder une ligne de données (4) pour des unités électroniques à distance (3) se basant sur un champ de bus déterministe et capable de fonctionner en temps réel en utilisant un protocole déclenché dans le temps et qui est conçu pour transférer toutes les données identiques émises par l'unité de processeur principale par l'intermédiaire de plusieurs ou de la totalité de ses ports à tous les abonnés de réseau, dans lequel il peut s'agir d'une pluralité d'unités électroniques à distance, de systèmes de bus et de composants supplémentaires, et pour permettre un trafic de données synchrone entre tous les abonnés de réseau, dans lequel le nombre des abonnés de réseau peut être étendu par le raccordement de systèmes de bus et de composants supplémentaires à un port (71, 72, 73) du concentrateur (7) et tous les abonnés de réseau sont en mesure de communiquer entre eux.

2. Système selon la revendication précédente 1, dans lequel l'unité de processeur principale (2, 21, 22) présente trois bornes, qui sont toutes conçues pour communiquer avec la même technologie de bus de données.

3. Système selon l'une des revendications précédentes, dans lequel l'unité de processeur principale (2) fait partie intégrante de deux bus de données séparés l'un de l'autre.

4. Système selon l'une des revendications précédentes, dans lequel l'unité de processeur principale (2) présente en outre une interface de bus de données de sauvegarde (9) qui est conçue pour fonctionner avec une technologie de bus de données différente par rapport aux technologies utilisées autrement dans l'unité de processeur principale (2).
